# EUROPEAN PATENT SPECIFICATION

(11) **EP 3 531 324 B1**
(45) Date of publication and mention of the grant of the patent: **25.08.2021**
(21) Application number: 19156473.1
(22) Date of filing: 11.02.2019
(51) Int. Cl.: G06F 21/55, H04L 29/06, H04W 12/12

(54) **IDENTIFICATION PROCESS FOR SUSPICIOUS ACTIVITY PATTERNS BASED ON ANCESTRY RELATIONSHIP**
IDENTIFIZIERUNGSVERFAHREN FÜR VERDÄCHTIGE AKTIVITÄTSMUSTER AUF DER BASIS VON ABSTAMMUNGSBEZIEHUNGEN
PROCESSUS D'IDENTIFICATION DE MODÈLES D'ACTIVITÉS SUSPECTES FONDÉ SUR LES LIENS D'ASCENDANCE

(30) Priority: 23.02.2018 US 201862634408 P; 23.10.2018 US 201816168588
(43) Date of publication of application: 28.08.2019
(73) Proprietor: CrowdStrike, Inc., Irvine CA 92618 (US)
(72) Inventor: Quang Nguyen, Cory-Khoi, Irvine, CA California 92618 (US); Nisbet, Brody, Irvine, CA California 92618 (US); Lee, John, Irvine, CA California 92618 (US)
(74) Representative: Hanna Moore + Curley

(56) References cited:
- US-A1- 2007 209 074
- US-A1- 2011 083 180
- US-A1- 2016 105 454
- US-A1- 2016 330 226

## Description

### RELATED APPLICATION

### BACKGROUND

With Internet use forming an ever greater part of day to day life, security exploits that steal or destroy system resources, data, and private information are an increasing problem. Governments and businesses devote significant resources to preventing intrusions and thefts related to these security exploits. Security exploits come in many forms, such as computer viruses, worms, trojan horses, spyware, keystroke loggers, adware, and rootkits. These exploits are delivered in or through a number of mechanisms, such as spearfish emails, clickable links, documents, executables, or archives. Some of the threats posed by security exploits are of such significance that they are described as cyber terrorism or industrial espionage.

To meet the threats posed by these security exploits, a number of tools capable of retrospective analysis of system performance and state have been developed. For example, the BackTracker tool described in "Backtracking Intrusions" by Samuel T. King and Peter M. Chen (ACM SIGOPS Operating Systems Review - SOSP '03, Volume 37, Issue 5, December 2003, pgs. 223-236) automatically identifies potential sequences of steps that occurred in an intrusion by analyzing a comprehensive log of system activities and data. While such tools can detect security exploits and their manners of operation, they can only operate retrospectively and thus place those attacked at a disadvantage, always one step behind the attacker. Further, these techniques typically operate only on records of a single device, and thus lack the context of activities occurring on other devices, which may be important in determining whether novel or unusual behavior is suspect.

US 2011/083180 describes a method and system for detection of previously unknown malware. The method comprises: receiving event information and file metadata; identifying whether the event information or the file metadata are indicative of the presence of already known malware, indicative of the presence of unknown malware, or indicative of malware absence; in the case of known malware or indicative of malware absence, filtering out the event information and the file metadata; and, for the remaining event information and file metadata, performing a risk analysis and risk assessment to determine if the event and the file metadata are indicative of the presence of previously unknown malware. The risk analysis and risk assessment includes forming a "parent-child" hierarchy of the files, and the risk assessed to the parent is based on the risk associated with the child.

US 2016/105454 describes a method of intrusion attack recovery using differential dependency tracking for attack forensics. The method monitors two or more hosts in a network to generate audit logs of system events. Dependency graphs (DGraphs) are generated based on the audit logs and a relevancy score for each edge of the DGraphs is determined. Irrelevant events from the DGraphs are pruned to generate a condensed backtracking graph. An attack origin is then located by backtracking from an attack detection point in the condensed backtracking graph.

US 2007/209074 describes a method for utilizing a mapping of activity occurring at and between devices on a computer network to detect and prevent network intrusions. A system (eGMIDS) is described that provides data collection functions, data fusion techniques, graph matching algorithms, and secondary and other search mechanisms. Threats are modeled as a set of entities and interrelations between the entities and sample threat patterns are stored within a database. The eGMIDS initiates a graph matching algorithm by which the threat patterns are compared within the generated activity graph via subgraph isomorphism. US 2016/330226 discloses detecting malicious processes using a graph model comprising vertices that represent system entities and edges that represent events between respective system entities, where an event sequence may be determined to be suspicious based on the graph and the valid path patterns using a random walk on the graph.

### SUMMARY

Accordingly there is provided a system, a method and a non-transitory computer readable media as defined in the claims that follow.

### BRIEF DESCRIPTION OF THE DRAWINGS

The detailed description is set forth with reference to the accompanying figures. In the figures, the left-most digit(s) of a reference number identifies the figure in which the reference number first appears. The use of the same reference numbers in different figures indicates similar or identical items or features.
FIG. 1 illustrates an example network connecting an adversary system initiating a suspicious process, a computing device affected by that process, and a security service system configured to identify and/or respond to the process.
FIG. 2 illustrates an example block diagram of the security service system.
FIG. 3 illustrates an example process for identifying a suspicious activity.
FIG. 4 illustrates an example process detailing one of blocks of FIG. 3 for identifying a previously unknown pattern.
FIG. 5 illustrates an example process detailing one of blocks of FIG. 4.
FIG. 6 illustrates an example additional process to the process of FIG. 4.

### DETAILED DESCRIPTION

### Overview

This disclosure describes, in part, a method and system for using a process based on ancestry relationship for identifying or detecting a suspicious activity such as a possible malicious attack or malware.

Examples of such system components include processes and modules, and examples of events include identifying a specific command, which may be referred as a trigger command, an associated command spawning the trigger command, which may be referred as an ancestry command, and a number of command steps between the ancestry command and the trigger command, which may be referred as an ancestry level. In other words, a trigger command is a particular generation descendent of an associated ancestry command, where the particular generation is equal to the ancestry level. One ancestry command may be associated with one or more trigger commands at more than one ancestry levels. Similarly, one trigger command may be associated with one or more ancestry commands at more than one ancestry levels. An administrative status of a user running the process having these events may also be considered. A relationship among such events, and potentially coupled with the administrative status of the user, may be evaluated to recognize a pattern as a suspicious activity,. The pattern may then be applied to other processes running on a monitored computing device to identify possible malicious activities.

An agent may reside on each of the monitored computing devices and may output events, such as a trigger command, an ancestry command, and an ancestry level, to a security service server, or cloud, which may be remote from the monitored computing device. The security service server receives those output events and, in substantially real-time, may analyze the output events, and identify a pattern. The security service server may then monitor for the pattern in processes running on the monitored computing devices, statistically analyze the processes identified with the pattern, and identify suspicion activities running on the monitored computing devices.

### Example Network

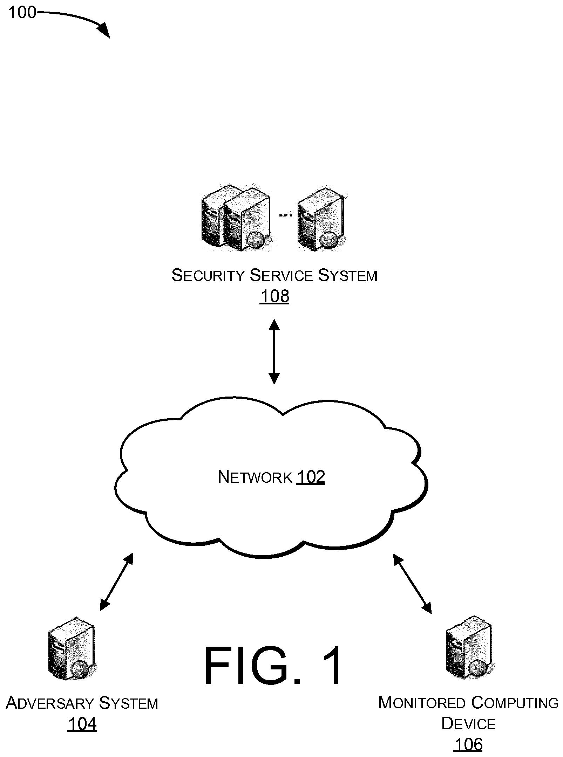

FIG. 1 illustrates an example environment 100 with a network 102 connecting an adversary system 104 which has initiated a suspicious activity, a monitored computing device 106 running the suspicious activity, and a security service system 108 configured to identify, monitor, and/or respond to the suspicious activity.

The security service system 108 may be local system or a distributed system such as a cloud computing, and may comprise a plurality of security service devices, may monitor and receive security-relevant information from the monitored computing device 106, which may be one of a plurality of monitored computing devices, via the network 102. The monitored computing device 106 may be part of a group, such as a customer or other entity, which may connect the monitored computing device 106 to the network 102 and to other monitored computing devices. The monitored computing device 106 may be a single device, a plurality of devices, or a cloud device distributed over the network 102. The monitored computing device 106 may be configured with an agent which may provide events that include security-relevant information to the security service system 108. The security service system 108 may in turn analyze the events, determine whether the process running on the monitored computing device 106 associated with the events is suspicious, and identify a suspicious pattern from analyzing the events. The security service system 108 may then monitor for the suspicious pattern in other processes running on the monitored computing device 106 to determine if any of the other processes are suspicious.

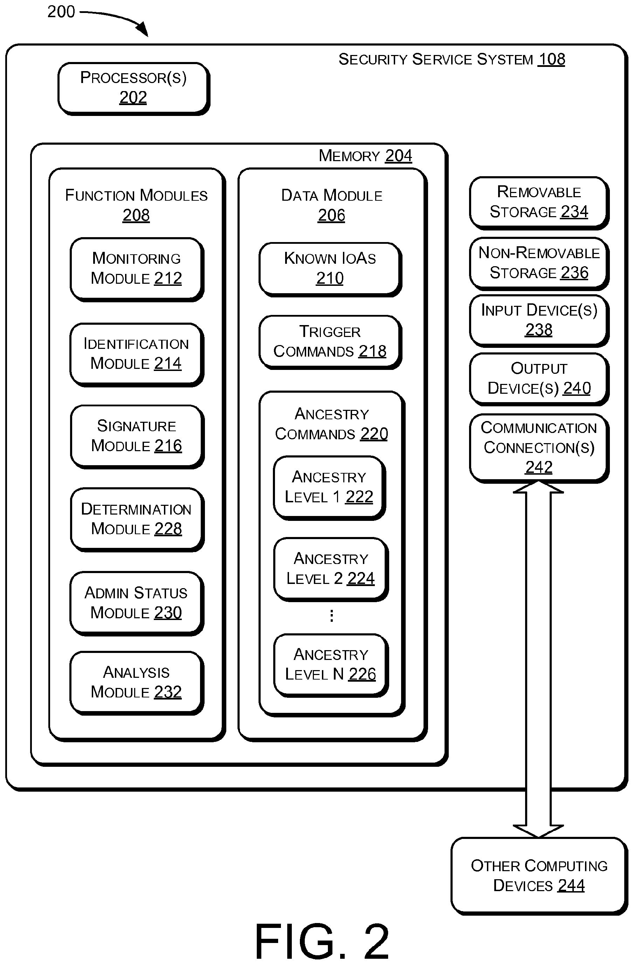

The devices implementing the security service system 108 may each be or include a server or server farm, multiple, distributed server farms, a mainframe, a work station, a personal computer (PC), a laptop computer, a tablet computer, a personal digital assistant (PDA), a cellular phone, a media center, an embedded system, or any other sort of device or devices. In one implementation, the devices implementing the security service system 108 represent a plurality of computing devices working in communication, such as a cloud computing network of nodes. When implemented on multiple computing devices, the security service system 108 may distribute modules and data, further described with reference to FIG. 2 below of the security service system 108 among the multiple computing devices. In some implementations, one or more of the devices implementing the security service system 108 represent one or more virtual machines implemented on one or more computing devices.

In some embodiments, the monitored computing device 106 may each be a server or server farm, multiple, distributed server farms, a mainframe, a work station, a PC, a laptop computer, a tablet computer, a PDA, a cellular phone, a media center, an embedded system, or any other sort of device or devices. When implemented on multiple computing devices, a monitored computing device 106 may distribute the agent among the multiple computing devices. In some implementations, a monitored computing device 106 represents one or more virtual machines implemented on one or more computing devices.

In various embodiments, the network 102 may include any one or more networks, such as wired networks, wireless networks, and combinations of wired and wireless networks. Further, the network 102 may include any one or combination of multiple different types of public or private networks (e.g., cable networks, the Internet, wireless networks, etc.). In some instances, computing devices communicate over the network 102 using a secure protocol (e.g., https) and/or any other protocol or set of protocols, such as the transmission control protocol/Internet protocol (TCP/IP).

In some embodiments, the monitored computing device 106 may be connected to the security service system 108 via a secure channel, such as a virtual private network (VPN) tunnel or other sort of secure channel and may provide events conveying security-relevant information to the security service system 108 through the secure channel. The agent on the monitored computing device 106 may also receive configuration updates, instructions, remediation, etc. from the security service system 108 via the secure channel.

### Example Security Service System

FIG. 2 illustrates an example block diagram 200 of the security service system 108 for identifying a possible malicious or suspicious activity. The security service system 108 may comprise one or more processors (processor(s)) 202 and a memory module 204 that is communicatively coupled to the processor(s) 202. The memory 204 may comprise a data module 206 and function modules 208 including various function modules that are communicatively coupled to each other and are executable by the processor(s) 202.

The data module 206 may be configured to store data, locally or in a cloud storage, known IoAs 210, such as historically collected or previous encountered suspicious activity patterns. The data module 206 may store data in various formats, such as SQL, NoSQL, encrypted, unencrypted, hashed, and the like. The function module 208 may comprise a monitoring module 212 configured to receive monitored data in a process running on a monitored computing device, such as the monitored computing device 106, and an identification module 214 configured to identify one or more IoAs based on a comparison between the received monitored data and the known IoAs 210. The function module 208 may further comprise a signature module 216 configured to generate a signature based on one or more IoAs identified by the identification module 214.

To identify a previously unknown suspicious activity pattern, the identification module 214 may be further configured to identify a trigger command by searching for the trigger command in the received monitored data. The trigger command is a command known to be associated with suspicious activities that may be running on the monitored computing device 106, and may be selected from a plurality of preselected trigger commands 218 stored in the data module 206 in the memory 204, such as "whoami," "taskkill," "nbtstat," "net /localgroup," "reg /add," and the like. The identification module 214 may also be configured to identify an ancestry command associated with the trigger command. The ancestry command is a command known to spawn the trigger command at a certain level. For example, an ancestry command "cmd.exe" may be known, or expected to be, a parent command of, i.e. one level prior to, the trigger command "whoami", and may be selected from a plurality of preselected ancestry commands 220 stored in the data module 206. Ancestry commands for a specific trigger command may be grouped based on expected levels of ancestry, or ancestry levels, from the specific trigger command, and may include different ancestry commands based on the ancestry level. Example ancestry commands based on the ancestry levels 1, 2, and N are illustrated as Ancestry Level 1 222, Ancestry Level 2 224, and Ancestry Level N 226, in FIG. 2.

The function modules 208 may also comprise a determination module 228 that is configured to determine an ancestry level of the ancestry command identified by the identification module 214. For example, for the trigger command "whoami," the determination module 228 may determine an ancestry level of the ancestry command "cmd.exe" identified by the identification module 214 to be two, or a grandparent. Because the ancestry command "cmd.exe" is known, or expected, to be a parent - not a grandparent - of the trigger command "whoami," the determination module 228 recognizes that the ancestry level is different from an expected ancestry level, which may be considered as a new IoA. The data module 206 may then store the new IoA as a part of the known IoAs 210. The identification module 214 may be further configured to identify a suspicious pattern based on the trigger command, the ancestry command, and the ancestry level of the ancestry command that is found to be unexpected by the determination module 228 as described above.

The function modules 208 may additionally comprise an administrative status module 230 that is configured to determine an administrative status of a user associated with the process running on the monitored computing device 106. The administrative status of the user may indicate types of processes he may likely run. For example, a user who is an administrator of the monitored computing device 106, or the network 102, may legitimately initiate and run certain processes that would be unusual for an ordinary user. The administrative status module 230 may assign different weight factors to different administrative statuses of users. The identification module 214 may identify one or more suspicious activity patterns based, additionally in part, on the administrative status and a corresponding weight of the user associated with the process running on the monitored computing device 108. Examples are discussed herein, e.g., with reference to block 504.

To identify other suspicious activities, the function modules 208 may additionally comprise an analysis module 232 that is configured to analyze all process trees in a plurality of connections within a specific environment belonging to the monitored computing device 106. Based on the analysis, the analysis module 232 may identify a process tree having a number of command lines less than a threshold number as a suspicious activity, statistically analyze all the process trees for frequency of the new suspicious activity pattern, and identify process tress having the frequency lower than a threshold frequency as malicious or suspicious activities. More common occurrences, i.e., the frequency being higher than the threshold, may generally be considered to be benign.

Example processes are illustrated below.

For a "whoami" process, the security service system 108 may look up the parent and grandparent processes, apply regexes to the file names, file paths, and command lines of the parent and grandparent processes, and exit the pattern if these fields contained expected values. Otherwise, the security service system 108 may determine that the pattern as suspicious.

For a "powershell" process, the security service system 108 may check the ancestry, up to the great-grandparent level, looking for suspicious ancestors. For example, if a productivity application, such as Microsoft® Word, or an Internet information service (IIS) exists as an ancestor, the security service system 108 may trigger a detection identifying the process as suspicious. The severity of this detection can vary depending on the type of initial target process and the nature of the suspicious ancestor.

For a "net" process, the security service system 108 may look up the grandparent process. For the SHA256 hash of the grandparent process' primary module, the security service system 108 may compute prevalence data across customer and/or global scope. If the hash has low prevalence, for example, it has only been seen at one customer and on less than 3 hosts at that customer, then the security service system 108 may trigger a detection identifying the process as suspicious. For the file name and/or command line of the grandparent, the security service system 108 may compute the prevalence of the values of these fields in the context of their occurrence in a grandparent of the initial "net" process. In other words, without being concerned with the prevalence of the file name and/or command line of the grandparent process per se, the security service system 108 may evaluate how often this file name and/or command line occurs in a process when it is a grandparent of "net". If the prevalence is low, the security service system 108 may trigger a detection identifying the process as suspicious. The security service system 108 may look up metadata on the grandparent process, specifically, whether it wrote a PE file, made a DNS request, made a network connection, or wrote an ASEP. If so, the security service system 108 may trigger a detection identifying the process as suspicious. Alternatively, for the metadata, the security service system 108 may compute prevalence on selected fields (for example, prevalence of the SHA256 hash of the PE that was written, or prevalence of the domain contained in the DNS request). If the prevalence of these fields is low across customer scope and/or global scope, the security service system 108 may trigger a detection identifying the process as suspicious.

For a set of two or more kinds of processes (for example, "cat" and "whoami"), whether the parent and/or grandparent of these processes are shared (i.e., whether the initial processes are siblings or cousins) may be determined, and if so, the security service system 108 may trigger a detection identifying the process as suspicious.

The security service system 108 may additionally include a removable storage 234 and non-removable storage 236, input device(s) 238, output device(s) 240, and communication connections 242 for communicating with other computing devices 244.

In various embodiments, the memory 204 may be volatile (such as RAM), non-volatile (such as ROM, flash memory, etc.) or some combination of the two. The data module 206 or the function modules 208 stored in the memory 204 may comprise methods, threads, processes, applications or any other sort of executable instructions, such as the instructions utilized to perform operations of the security service system 108 in conjunction with other devices of the security service system 108 (in examples in which the security service system 108 includes multiple devices). The data module 206 and the function modules 208 may also include files and databases.

In some embodiments, the processor(s) 202 is a central processing unit (CPU), a graphics processing unit (GPU), or both CPU and GPU, or other processing unit or component known in the art.

The security service system 108 may also include additional data storage devices (removable and/or non-removable) such as, for example, magnetic disks, optical disks, or tape. Such additional storage is illustrated in FIG. 2 by removable storage 234 and non-removable storage 236. Non-transitory computer-readable media may include volatile and nonvolatile, removable and non-removable media implemented in any method or technology for storage of information. The memory 204, removable storage 234 and non-removable storage 236 are all examples of computer-readable storage media. Non-transitory computer-readable media include, but are not limited to, RAM, ROM, EEPROM, flash memory or other memory technology, CD-ROM, digital versatile disks (DVD) or other optical storage, magnetic cassettes, magnetic tape, magnetic disk storage or other magnetic storage devices, or any other physical, tangible medium which can be used to store the desired information and which can be accessed by the security service system 108. Any such non-transitory computer-readable media may be part of the security service system 108.

The security service system 108 may also have input device(s) 238, such as a keyboard, a mouse, a touch-sensitive display, voice input device, etc., and output device(s) 240 such as a display, speakers, a printer, etc. These devices are well known in the art and need not be discussed at length here.

The security service system 108 may also contain communication connections 242 that allow the security service system 108 to communicate with other computing devices 244, such as any or all of the monitored computing devices 104.

### Example Processes

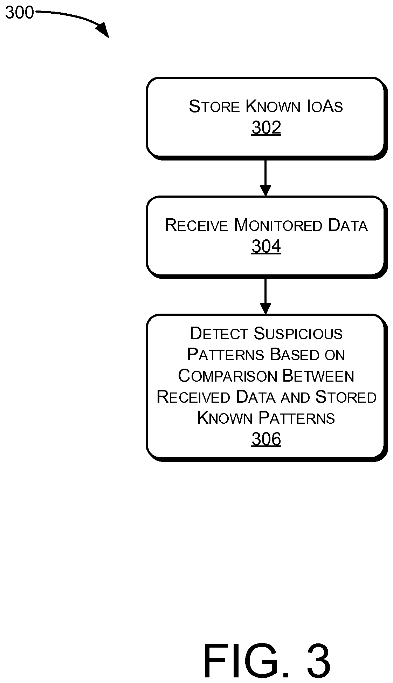

FIGs. 3-6 illustrate example processes 300, 400, 500, and 600, respectively. These processes are illustrated as logical flow graphs, each operation of which represents a sequence of operations that can be implemented in hardware, software, or a combination thereof. In the context of software, the operations represent computer-executable instructions stored on one or more computer-readable storage media that, when executed by one or more processors, perform the recited operations. Generally, computer-executable instructions include routines, programs, objects, components, data structures, and the like that perform particular functions or implement particular abstract data types. The order in which the operations are described is not intended to be construed as a limitation, and any number of the described operations can be combined in any order and/or in parallel to implement the processes.

FIG. 3 illustrates an example process 300 for identifying a suspicious activity pattern. At block 302, the security service system 108 may store known suspicious activity patterns or known IoAs in the data module 206 as described above with reference to FIG. 2. For example, the known suspicious activity patterns and/or known IoAs may be stored locally or in a cloud storage in various formats, such as SQL, NoSQL, encrypted, unencrypted, hashed, and the like.

At block 304, the security service system 108 may receive, from the monitoring module 212, monitored data in a process running on a monitored computing device, such as the monitored computing device 106.

At block 306, the security service system 108 may identify one or more suspicious activity patterns or IoAs. Block 306 can include comparing the received monitored data and the known more suspicious activity patterns or IoAs, and identifying the suspicious activity patterns or IoAs based at least in part on the results of the comparison.

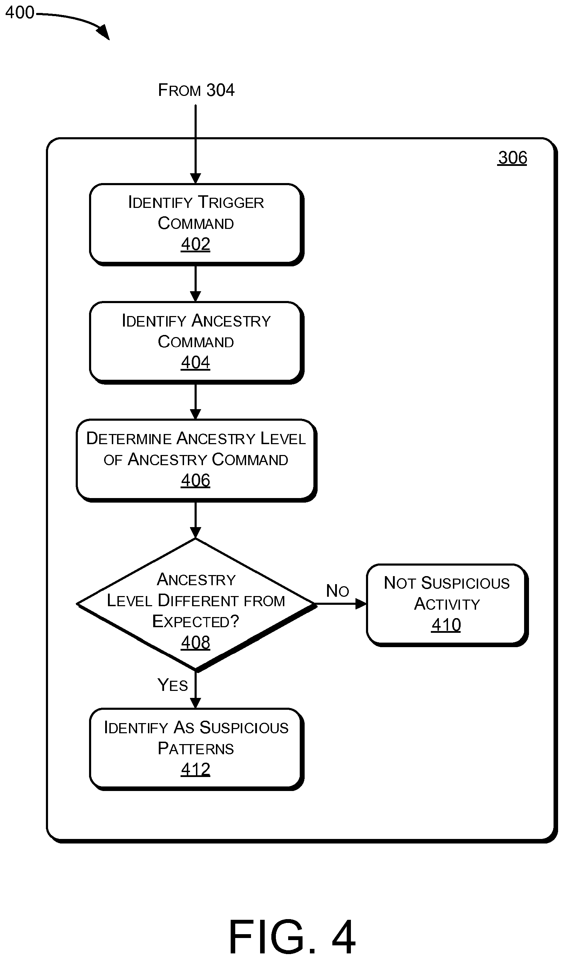

FIG. 4 illustrates an example process 400 detailing block 306 for identifying a previously unknown IoA. At block 402, the security service system 108 may identify a trigger command, such as "whoami" in a process running on a monitored device, such as the monitored computing device 106 as discussed above with reference to FIG. 2, by searching for the trigger command in the received monitored data. As discussed above, the trigger command is a command known to potentially be associated with suspicious activities that may be running on the monitored computing device 106 and may be selected from a plurality of preselected trigger commands, such as "whoami," "taskkill," "nbtstat," "net /localgroup," "reg/add," and the like. The security service system 108 may then identify, at block 404, an ancestry command of the trigger command "whoami," such as "cmd.exe" and determine an ancestry level of the ancestry command at block 406.

The ancestry command is a command known to spawn the trigger command at a certain level. For example, an ancestry command "cmd.exe" may be known or expected to be a parent command of, i.e. one level prior to, the trigger command "whoami", and may be selected from a plurality of preselected ancestry commands. Ancestry commands for a specific trigger command may be grouped based on expected levels of ancestry, or ancestry levels, from the specific trigger command, and may include different ancestry commands based on the ancestry level. At block 408, the security service system 108 may determine whether the ancestry level of the ancestry command is different from an expected ancestry level of the ancestry command for the trigger command.

If the ancestry level of the ancestry command matches (is not different from) an expected ancestry level, then the security service system 108 determines that there is no suspicious activity (block 410). For example, if the ancestry command "cmd.exe" were detected as a parent of the trigger command "whoami," then the ancestry level would be one, which the expected level of the ancestry command "cmd.exe" for the trigger command "whoami." However, if the ancestry level of the ancestry command is different from an expected ancestry level, for example, the ancestry command "cmd.exe" being detected as a grandparent of the trigger command "whoami", making the ancestry level to be two instead of the expected ancestry level of one, then the trigger command, the ancestry command, and the ancestry level of the ancestry command may be identified as a suspicious activity at block 412.

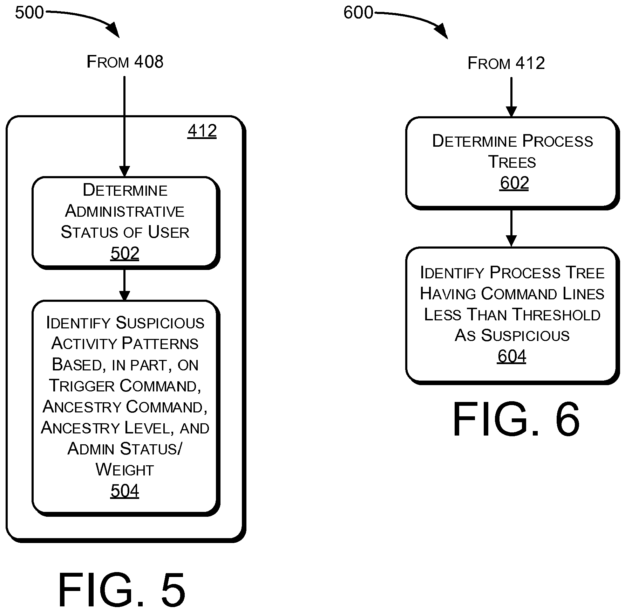

FIG. 5 illustrates an example process 500 detailing block 412 of FIG. 4. At block 502, an administrative status of a user, which may be a person or a device, associated with the process running on the monitored computing device 106, may be determined. The administrative status of the user may be determined based on an identify of the user, a user credential associated with the process running on the monitored device, allowed users on the monitored device, and the like. The administrative status of the user may indicate types of processes he may likely run. For example, a user who is an administrator of the monitored computing device 106, or the network 102, may legitimately initiate and run certain processes that would be unusual for a plain user. At block 504, a weight factor, which may be pre-determined, based on the administrative status, may be additionally considered for identifying the suspicious activity patterns. For example, each suspicious activity pattern currently identified may be assigned a severity level. A currently identified suspicious activity pattern with a severity level exceeding a predetermined threshold may be used as basis for identifying as a suspicious activity pattern. However, the severity level may be reduced by the weight factor of the user, such that the currently identified suspicious activity pattern with the severity level exceeding the predetermined threshold may be reduced below the predetermined threshold if the user were an administrator.

FIG. 6 illustrates an example additional process 600 to the process of FIG. 4. At block 602, process trees in a plurality of connections within a specific environment belonging to the monitored computing device 106 are determined, and, at block 604, a process tree having a number of command lines less than a threshold number as a suspicious activity. The process tree may be statistically analyzed for frequency of the new suspicious activity pattern, and may be identified as a suspicious activity if the frequency is lower than a threshold number frequency.

### CONCLUSION

Although the subject matter has been described in language specific to structural features and/or methodological acts, it is to be understood that the subject matter defined in the appended claims is not necessarily limited to the specific features or acts described. Rather, the specific features and acts are disclosed as exemplary forms of implementing the claims.

## Claims

1. A security service system (108) for identifying a suspicious activity, the security service comprising:
one or more processors (202); and
memory (204) coupled to the one or more processors, the memory including a plurality of modules communicatively coupled to each other and executable by the one or more processors, the plurality of modules comprising:
a data module (206) configured to store known patterns, the known patterns including known suspicious activity patterns and known indicators of attack (IoAs);
a monitoring module (212) configured to receive monitored data in a process running on a monitored computing device; and
an identification module (214) configured to identify one or more suspicious activity patterns based on a comparison between the received monitored data and the known patterns,
**characterized in that**:
the plurality of modules further comprises a determination module (228) configured to determine an ancestry level of an ancestry command and to determine whether the ancestry level of the ancestry command is different from an expected ancestry level of the ancestry command for a trigger command,
the identification module is further configured to identify the trigger command in the process running on the monitored computing device and to identify the ancestry command associated with the trigger command, and
the data module is further configured to store information associated with the trigger command, the ancestry command, and the ancestry level of the ancestry command as a new suspicious activity pattern.

2. A security service system of claim 1, wherein:
the trigger command is a trigger command of a plurality of preselected trigger commands, and
the ancestry command is an ancestry command of a plurality of preselected ancestry commands associated with the trigger command.

3. A security service system of claim 2, wherein the plurality of preselected ancestry commands is associated with the trigger command for the expected ancestry level.

4. A security service system of claim 3, wherein the plurality of the preselected ancestry commands is different from a plurality of preselected ancestry commands for a second ancestry level that is associated with the trigger command and that is different from the expected ancestry level.

5. A security service system of claim 1, wherein:
the plurality of modules further comprises an administrative status module (230) configured to determine an administrative status of a user associated with the process running on the monitored computing device.

6. A security service system of claim 5, wherein the identification module is further configured to identify the one or more suspicious activity patterns based, in part, on a weight factor associated with the administrative status of the user.

7. A security service system of claim 1, wherein the plurality of modules further comprises an analysis module (232) configured to:
determine a plurality of process trees in a plurality of connections within a specific environment to which the monitored computing device belongs,
identify a process tree of the plurality of process trees having a number of command lines less than a threshold number as a suspicious activity,
statistically analyze the process tree of the plurality of process trees for frequency of the new suspicious activity pattern; and
identify the process tree as a suspicious activity if the frequency is lower than a threshold frequency.

8. A method (300, 400, 500, 600) for detecting a suspicious activity, the method comprising, at a security service system:
storing (302) known patterns, the known patterns including known suspicious activity patterns and known indicators of attack (IoAs);
receiving (304) monitored data in a process running on a monitored computing device; and
identifying (306, 504) one or more suspicious activity patterns based on a comparison between the received monitored data and the known patterns,
**characterized by** further comprising:
identifying (402) a trigger command in the process running on the monitored computing device;
identifying (404) an ancestry command associated with the trigger command;
determining (406) an ancestry level of the ancestry command; and
upon determining (408) that the ancestry level of the ancestry command is different from an expected ancestry level of the ancestry command for the trigger command, storing information associated with the trigger command, the ancestry command, and the ancestry level of the ancestry command as a new suspicious activity pattern.

9. A method of claim 8,
wherein the trigger command is a trigger command of a plurality of preselected trigger commands, and
wherein the ancestry command is an ancestry command of a plurality of preselected ancestry commands associated with the trigger command.

10. A method of claim 9, wherein the plurality of preselected ancestry commands is associated with the trigger command for the expected ancestry level.

11. A method of claim 10, wherein the plurality of the preselected ancestry commands comprises a different set of ancestry commands from a plurality of preselected ancestry commands for a different ancestry level associated with the trigger command.

12. A method of claim 8, further comprising:
determining (502) an administrative status of a user associated with the process running on the monitored computing device.

13. A method of claim 12, wherein identifying (504) the one or more suspicious activity patterns is based, in part, on a weight factor associated with the administrative status of the user.

14. A method of claim 8, further comprising:
determining (602) a plurality of process trees in a plurality of connections within a specific environment to which the monitored computing device belongs; and
identifying (604) a process tree of the plurality of process tress having a number of command lines less than a threshold number as a suspicious activity.

15. A method of claim 14, wherein identifying the process tree as the suspicious activity comprises:
statistically analyzing the process tree for frequency of the new suspicious activity pattern; and
identifying the process tree as a suspicious activity if the frequency is lower than a threshold frequency.

16. Non-transitory computer-readable media having stored thereon a plurality of programming instructions which, when executed by one or more computing devices, cause the one or more computing devices to perform operations comprising:
storing known patterns, the known patterns including known suspicious activity patterns and known indicators of attack (IoAs);
receiving monitored data in a process running on a monitored computing device; and
identifying one or more suspicious activity patterns based on a comparison between the received monitored data and the known patterns,
**characterized in that** the operations further comprise:
identifying a trigger command in the process running on the monitored computing device;
identifying an ancestry command associated with the trigger command;
determining an ancestry level of the ancestry command; and
upon determining that the ancestry level of the ancestry command is different from an expected ancestry level of the ancestry command for the trigger command, storing information associated with the trigger command, the ancestry command, and the ancestry level of the ancestry command as a new suspicious activity pattern.

17. Non-transitory computer-readable media of claim 16,
wherein the trigger command is a trigger command of a plurality of preselected trigger commands, and
wherein the ancestry command is an ancestry command of a plurality of preselected ancestry commands associated with the trigger command.

18. Non-transitory computer-readable media of claim 16, wherein the plurality of preselected ancestry commands is associated with the trigger command for the ancestry level and is different from a plurality of preselected ancestry commands for a second ancestry level that is associated with the trigger command and that is different from the expected ancestry level.

19. Non-transitory computer-readable media of claim 16, wherein the operations further comprise:
determining an administrative status of a user associated with the process running on the monitored computing device,
wherein identifying the one or more suspicious activity patterns is based, in part, on the administrative status of the user associated with the process running on the monitored computing device, the administrative status having a weight factor.

20. Non-transitory computer-readable media of claim 16, wherein the operations further comprise:
determining a plurality of process trees in a plurality of connections within a specific environment to which the monitored computing device belongs;
identifying a process tree of the plurality of process trees having a number of command lines less than a threshold number as a suspicious activity; and
statistically analyzing the process tree for frequency of the new suspicious activity pattern; and
identifying the process tree as a suspicious activity if the frequency is lower than a threshold frequency.

## Patentansprüche

1. Sicherheitsdienstsystem (108) zum Identifizieren einer verdächtigen Aktivität, wobei der Sicherheitsdienst Folgendes umfasst:
einen oder mehrere Prozessoren (202); und
einen Speicher (204), der mit dem einen oder den mehreren Prozessoren gekoppelt ist, wobei der Speicher mehrere Module beinhaltet, die miteinander kommunikativ gekoppelt sind und durch den einen oder die mehreren Prozessoren ausführbar sind, wobei die mehreren Module Folgendes umfassen:
ein Datenmodul (206), das konfiguriert ist, um bekannte Muster zu speichern, wobei die bekannten Muster bekannte verdächtige Aktivitätsmuster und bekannte Angriffsindikatoren (*indicators of attack*- IoAs) beinhalten;
ein Überwachungsmodul (212), das konfiguriert ist, um überwachte Daten in einem Prozess zu empfangen, der auf einer überwachten Rechenvorrichtung läuft; und
ein Identifikationsmodul (214), das konfiguriert ist, um ein oder mehrere verdächtige Aktivitätsmuster basierend auf einem Vergleich zwischen den empfangenen überwachten Daten und den bekannten Mustern zu identifizieren, **dadurch gekennzeichnet, dass**:
die mehreren Module ferner ein Bestimmungsmodul (228) umfassen, das konfiguriert ist, um eine Abstammungsebene eines Abstammungsbefehls zu bestimmen und um zu bestimmen, ob sich die Abstammungsebene des Abstammungsbefehls von einer erwarteten Abstammungsebene des Abstammungsbefehls für einen Auslöserbefehl unterscheidet,
das Identifikationsmodul ferner konfiguriert ist, um den Auslöserbefehl in dem Prozess zu identifizieren, der auf der überwachten Rechenvorrichtung läuft, und um den Abstammungsbefehl, der mit dem Auslöserbefehl verknüpft ist, zu identifizieren, und
das Datenmodul ferner konfiguriert ist, um Informationen, die mit dem Auslöserbefehl, dem Abstammungsbefehl und der Abstammungsebene des Abstammungsbefehls verknüpft sind, als ein neues verdächtiges Aktivitätsmuster zu speichern.

2. Sicherheitsdienstsystem nach Anspruch 1, wobei:
der Auslöserbefehl ein Auslöserbefehl mehrerer zuvor ausgewählter Auslöserbefehle ist, und
der Abstammungsbefehl ein Abstammungsbefehl mehrerer zuvor ausgewählter Abstammungsbefehle ist, der mit dem Auslöserbefehl verknüpft ist.

3. Sicherheitsdienstsystem nach Anspruch 2, wobei die mehreren zuvor ausgewählten Abstammungsbefehle mit dem Auslöserbefehl für die erwartete Abstammungsebene verknüpft sind.

4. Sicherheitsdienstsystem nach Anspruch 3, wobei sich die mehreren zuvor ausgewählten Abstammungsbefehle von mehreren zuvor ausgewählten Abstammungsbefehlen für eine zweite Abstammungsebene unterscheiden, die mit dem Auslöserbefehl verknüpft ist und sich von der erwarteten Abstammungsebene unterscheidet.

5. Sicherheitsdienstsystem nach Anspruch 1, wobei:
die mehreren Module ferner ein Verwaltungsstatusmodul (230) umfassen, das konfiguriert ist, um einen Verwaltungsstatus eines Benutzers zu bestimmen, der mit dem Prozess verknüpft ist, der auf der überwachten Rechenvorrichtung läuft.

6. Sicherheitsdienstsystem nach Anspruch 5, wobei das Identifikationsmodul ferner konfiguriert ist, um das eine oder die mehreren verdächtigen Aktivitätsmuster wenigstens teilweise basierend auf einem Gewichtungsfaktor zu identifizieren, der mit dem Verwaltungsstatus des Benutzers verknüpft ist.

7. Sicherheitsdienstsystem nach Anspruch 1, wobei die mehreren Module ferner ein Analysemodul (232) umfassen, das zu Folgendem konfiguriert ist:
Bestimmen mehrerer Prozessbäume in mehreren Verbindungen innerhalb einer spezifischen Umgebung, zu der die überwachte Rechenvorrichtung gehört,
Identifizieren eines Prozessbaums der mehreren Prozessbäume, der eine Anzahl von Befehlszeilen aufweist, die kleiner als eine Schwellenanzahl ist, als eine verdächtige Aktivität,
statistisches Analysieren des Prozessbaums der mehreren Prozessbäume auf eine Häufigkeit des neuen verdächtigen Aktivitätsmusters; und
Identifizieren des Prozessbaums als eine verdächtige Aktivität, falls die Häufigkeit geringer als eine Schwellenhäufigkeit ist.

8. Verfahren (300, 400, 500, 600) zum Erkennen einer verdächtigen Aktivität, wobei das Verfahren bei einem Sicherheitsdienstsystem Folgendes umfasst:
Speichern (302) bekannter Muster, wobei die bekannten Muster bekannte verdächtige Aktivitätsmuster und bekannte Angriffsindikatoren (loAs) beinhalten;
Empfangen (304) von überwachten Daten in einem Prozess, der auf einer überwachten Rechenvorrichtung läuft; und
Identifizieren (306, 504) eines oder mehrerer verdächtiger Aktivitätsmuster basierend auf einem Vergleich zwischen den empfangenen überwachten Daten und den bekannten Mustern,
**gekennzeichnet dadurch, dass** es ferner Folgendes umfasst:
Identifizieren (402) eines Auslöserbefehls in dem Prozess, der auf der überwachten Rechenvorrichtung läuft;
Identifizieren (404) eines Abstammungsbefehls, der mit dem Auslöserbefehl verknüpft ist;
Bestimmen (406) einer Abstammungsebene des Abstammungsbefehls; und
beim Bestimmen (408), dass sich die Abstammungsebene des Abstammungsbefehls von einer erwarteten Abstammungsebene des Abstammungsbefehls für den Auslöserbefehl unterscheidet, Speichern von Informationen, die mit dem Auslöserbefehl, dem Abstammungsbefehl und der Abstammungsebene des Abstammungsbefehls verknüpft sind, als ein neues verdächtiges Aktivitätsmuster.

9. Verfahren nach Anspruch 8,
wobei der Auslöserbefehl ein Auslöserbefehl mehrerer zuvor ausgewählter Auslöserbefehle ist, und
wobei der Abstammungsbefehl ein Abstammungsbefehl mehrerer zuvor ausgewählter Abstammungsbefehle ist, der mit dem Auslöserbefehl verknüpft ist.

10. Verfahren nach Anspruch 9, wobei die mehreren zuvor ausgewählten Abstammungsbefehle mit dem Auslöserbefehl für die erwartete Abstammungsebene verknüpft sind.

11. Verfahren nach Anspruch 10, wobei die mehreren zuvor ausgewählten Abstammungsbefehle einen Satz von Abstammungsbefehlen, der sich von mehreren zuvor ausgewählten Abstammungsbefehlen unterscheidet, für eine unterschiedliche Abstammungsebene umfasst, die mit dem Auslöserbefehl verknüpft ist.

12. Verfahren nach Anspruch 8, das ferner Folgendes umfasst:
Bestimmen (502) eines Verwaltungsstatus eines Benutzers, der mit dem Prozess verknüpft ist, der auf der überwachten Rechenvorrichtung ausgeführt wird.

13. Verfahren nach Anspruch 12, wobei das Identifizieren (504) des einen oder der mehreren verdächtigen Aktivitätsmuster wenigstens teilweise auf einem Gewichtungsfaktor basiert, der mit dem Verwaltungsstatus des Benutzers verknüpft ist.

14. Verfahren nach Anspruch 8, das ferner Folgendes umfasst:
Bestimmen (602) mehrerer Prozessbäume in mehreren Verbindungen innerhalb einer spezifischen Umgebung, zu der die überwachte Rechenvorrichtung gehört; und
Identifizieren (604) eines Prozessbaums der mehreren Prozessbäume, der einer Anzahl von Befehlszeilen aufweist, die kleiner als eine Schwellenanzahl ist, als eine verdächtige Aktivität.

15. Verfahren nach Anspruch 14, wobei das Identifizieren des Prozessbaums als die verdächtige Aktivität Folgendes umfasst:
statistisches Analysieren des Prozessbaums auf die Häufigkeit des neuen verdächtigen Aktivitätsmusters; und
Identifizieren des Prozessbaums als eine verdächtige Aktivität, falls die Häufigkeit geringer als eine Schwellenhäufigkeit ist.

16. Nicht flüchtige computerlesbare Medien, auf denen mehrere Programmieranweisungen gespeichert sind, die, wenn sie durch eine oder mehrere Rechenvorrichtungen ausgeführt werden, die eine oder die mehreren Rechenvorrichtungen veranlassen, Operationen durchzuführen, die Folgendes umfassen:
Speichern bekannter Muster, wobei die bekannten Muster bekannte verdächtige Aktivitätsmuster und bekannte Angriffsindikatoren (loAs) beinhalten;
Empfangen von überwachten Daten in einem Prozess, der auf einer überwachten Rechenvorrichtung läuft; und
Identifizieren eines oder mehrerer verdächtiger Aktivitätsmuster basierend auf einem Vergleich zwischen den empfangenen überwachten Daten und den bekannten Mustern,
**dadurch gekennzeichnet, dass** die Operationen ferner Folgendes umfassen:
Identifizieren eines Auslöserbefehls in dem Prozess, der auf der überwachten Rechenvorrichtung läuft;
Identifizieren eines Abstammungsbefehls, der mit dem Auslöserbefehl verknüpft ist;
Bestimmen einer Abstammungsebene des Abstammungsbefehls; und
beim Bestimmen, dass sich die Abstammungsebene des Abstammungsbefehls von einer erwarteten Abstammungsebene des Abstammungsbefehls für den Auslöserbefehl unterscheidet, Speichern von Informationen, die mit dem Auslöserbefehl, dem Abstammungsbefehl und der Abstammungsebene des Abstammungsbefehls verknüpft sind, als ein neues verdächtiges Aktivitätsmuster.

17. Nicht flüchtige computerlesbare Medien nach Anspruch 16,
wobei der Auslöserbefehl ein Auslöserbefehl mehrerer zuvor ausgewählter Auslöserbefehle ist, und
wobei der Abstammungsbefehl ein Abstammungsbefehl mehrerer zuvor ausgewählter Abstammungsbefehle ist, die mit dem Auslöserbefehl verknüpft sind.

18. Nicht flüchtige computerlesbare Medien nach Anspruch 16, wobei die mehreren zuvor ausgewählten Abstammungsbefehle mit dem Auslöserbefehl für die Abstammungsebene verknüpft sind und sich von mehreren zuvor ausgewählten Abstammungsbefehlen für eine zweite Abstammungsebene unterscheiden, die mit dem Auslöserbefehl verknüpft ist und sich von der erwarteten Abstammungsebene unterscheidet.

19. Nicht flüchtige computerlesbare Medien nach Anspruch 16, wobei die Operationen ferner Folgendes umfassen:
Bestimmen eines Verwaltungsstatus eines Benutzers, der mit dem Prozess verknüpft ist, der auf der überwachten Rechenvorrichtung läuft,
wobei das Identifizieren des einen oder der mehreren verdächtigen Aktivitätsmuster wenigstens teilweise auf dem Verwaltungsstatus des Benutzers basiert, der mit dem Prozess verknüpft ist, der auf der überwachten Rechenvorrichtung läuft, wobei der Verwaltungsstatus einen Gewichtungsfaktor aufweist.

20. Nicht flüchtige computerlesbare Medien nach Anspruch 16, wobei die Operationen ferner Folgendes umfassen:
Bestimmen mehrerer Prozessbäume in mehreren Verbindungen innerhalb einer spezifischen Umgebung, zu der die überwachte Rechenvorrichtung gehört;
Identifizieren eines Prozessbaums der mehreren Prozessbäume, der einer Anzahl von Befehlszeilen aufweist, die kleiner als eine Schwellenanzahl ist, als eine verdächtige Aktivität; und
statistisches Analysieren des Prozessbaums auf die Häufigkeit des neuen verdächtigen Aktivitätsmusters; und
Identifizieren des Prozessbaums als eine verdächtige Aktivität, falls die Häufigkeit geringer als eine Schwellenhäufigkeit ist.

## Revendications

1. Système de service de sécurité (108) destiné à identifier une activité suspecte, le service de sécurité comprenant :
un ou plusieurs processeurs (202) ; et
une mémoire (204) couplée au ou aux processeurs, la mémoire comportant une pluralité de modules couplés en communication les uns aux autres et exécutables par le ou les processeurs, la pluralité de modules comprenant :
un module de données (206) configuré pour stocker des modèles connus, les modèles connus comportant des modèles d'activité suspecte connus et des indicateurs d'attaque connus (loA) ;
un module de surveillance (212) configuré pour recevoir des données surveillées dans un processus en cours d'exécution sur un dispositif informatique surveillé ; et
un module d'identification (214) configuré pour identifier un ou plusieurs modèles d'activité suspecte sur la base d'une comparaison entre les données surveillées reçues et les modèles connus,
**caractérisé en ce que** :
la pluralité de modules comprend en outre un module de détermination (228) configuré pour déterminer un niveau d'ascendance d'une commande d'ascendance et pour déterminer si le niveau d'ascendance de la commande d'ascendance est différent d'un niveau d'ascendance attendu de la commande d'ascendance pour une commande de déclenchement,
le module d'identification est en outre configuré pour identifier la commande de déclenchement dans le processus en cours d'exécution sur le dispositif informatique surveillé et pour identifier la commande d'ascendance associée à la commande de déclenchement, et
le module de données est en outre configuré pour stocker des informations associées à la commande de déclenchement, à la commande d'ascendance et au niveau d'ascendance de la commande d'ascendance en tant que nouveau modèle d'activité suspecte.

2. Système de service de sécurité selon la revendication 1, dans lequel :
la commande de déclenchement est une commande de déclenchement d'une pluralité de commandes de déclenchement présélectionnées, et
la commande d'ascendance est une commande d'ascendance d'une pluralité de commandes d'ascendance présélectionnées associées à la commande de déclenchement.

3. Système de service de sécurité selon la revendication 2, dans lequel la pluralité de commandes d'ascendance présélectionnées est associée à la commande de déclenchement pour le niveau d'ascendance attendu.

4. Système de service de sécurité selon la revendication 3, dans lequel la pluralité des commandes d'ascendance présélectionnées est différente d'une pluralité de commandes d'ascendance présélectionnées pour un second niveau d'ascendance qui est associé à la commande de déclenchement et qui est différent du niveau d'ascendance attendu.

5. Système de service de sécurité selon la revendication 1, dans lequel :
la pluralité de modules comprend en outre un module d'état administratif (230) configuré pour déterminer un état administratif d'un utilisateur associé au processus en cours d'exécution sur le dispositif informatique surveillé.

6. Système de service de sécurité selon la revendication 5, dans lequel le module d'identification est en outre configuré pour identifier le ou les modèles d'activité suspecte sur la base, en partie, d'un facteur de pondération associé au statut administratif de l'utilisateur.

7. Système de service de sécurité selon la revendication 1, dans lequel la pluralité de modules comprend en outre un module d'analyse (232) configuré pour :
déterminer une pluralité d'arbres de processus dans une pluralité de connexions dans un environnement spécifique auquel appartient le dispositif informatique surveillé,
identifier un arbre de processus de la pluralité d'arbres de processus ayant un nombre de lignes de commande inférieur à un nombre seuil en tant qu'activité suspecte,
analyser statistiquement l'arbre de processus de la pluralité d'arbres de processus pour la fréquence du nouveau modèle d'activité suspecte ; et
identifier l'arbre de processus comme une activité suspecte si la fréquence est inférieure à une fréquence seuil.

8. Procédé (300, 400, 500, 600) de détection d'une activité suspecte, le procédé comprenant, au niveau d'un système de service de sécurité :
le stockage (302) des modèles connus, les modèles connus comprenant des modèles d'activités suspectes connus et des indicateurs d'attaque connus (loA) ;
la réception (304) des données surveillées dans un processus en cours d'exécution sur un dispositif informatique surveillé ; et
l'identification (306, 504) d'un ou plusieurs modèles d'activité suspecte sur la base d'une comparaison entre les données surveillées reçues et les modèles connus,
**caractérisé en ce qu'**il comprend en outre :
l'identification (402) d'une commande de déclenchement dans le processus en cours d'exécution sur le dispositif informatique surveillé ;
l'identification (404) d'une commande d'ascendance associée à la commande de déclenchement ;
la détermination (406) d'un niveau d'ascendance de la commande d'ascendance ; et
lors de la détermination (408) que le niveau d'ascendance de la commande d'ascendance est différent d'un niveau d'ascendance attendu de la commande d'ascendance pour la commande de déclenchement, le stockage des informations associées à la commande de déclenchement, la commande d'ascendance et le niveau d'ascendance de la commande d'ascendance comme un nouveau modèle d'activité suspecte.

9. Procédé selon la revendication 8,
dans lequel la commande de déclenchement est une commande de déclenchement d'une pluralité de commandes de déclenchement présélectionnées, et
dans lequel la commande d'ascendance est une commande d'ascendance d'une pluralité de commandes d'ascendance présélectionnées associées à la commande de déclenchement.

10. Procédé selon la revendication 9, dans lequel la pluralité de commandes d'ascendance présélectionnées est associée à la commande de déclenchement pour le niveau d'ascendance attendu.

11. Procédé selon la revendication 10, dans lequel la pluralité des commandes d'ascendance présélectionnées comprend un ensemble différent de commandes d'ascendance à partir d'une pluralité de commandes d'ascendance présélectionnées pour un niveau d'ascendance différent associé à la commande de déclenchement.

12. Procédé selon la revendication 8, comprenant en outre :
la détermination (502) d'un état administratif d'un utilisateur associé au processus en cours d'exécution sur le dispositif informatique surveillé.

13. Procédé selon la revendication 12, dans lequel l'identification (504) du ou des modèles d'activités suspectes est basée, en partie, sur un facteur de pondération associé au statut administratif de l'utilisateur.

14. Procédé selon la revendication 8, comprenant en outre :
la détermination (602) d'une pluralité d'arbres de processus dans une pluralité de connexions dans un environnement spécifique auquel appartient le dispositif informatique surveillé ; et
l'identification (604) d'un arbre de processus de la pluralité d'éléments de processus ayant un nombre de lignes de commande inférieur à un nombre seuil en tant qu'activité suspecte.

15. Procédé selon la revendication 14, dans lequel l'identification de l'arbre de processus en tant qu'activité suspecte comprend :
l'analyse statistique de l'arbre de processus pour la fréquence du nouveau modèle d'activité suspecte ; et
l'identification de l'arbre de processus comme une activité suspecte si la fréquence est inférieure à une fréquence seuil.

16. Support lisible par ordinateur non transitoire sur lequel est stocké une pluralité d'instructions de programmation qui, lorsqu'elles sont exécutées par un ou plusieurs dispositifs informatiques, amènent le ou les dispositifs informatiques à effectuer des opérations comprenant :
le stockage des modèles connus, les modèles connus comprenant des modèles d'activité suspects connus et des indicateurs d'attaque connus (loA) ;
la réception des données surveillées dans un processus en cours d'exécution sur un dispositif informatique surveillé ; et
l'identification d'un ou plusieurs modèles d'activités suspectes sur la base d'une comparaison entre les données surveillées reçues et les modèles connus,
**caractérisé en ce que** les opérations comprennent en outre :
l'identification d'une commande de déclenchement dans le processus en cours d'exécution sur le dispositif informatique surveillé ;
l'identification d'une commande d'ascendance associée à la commande de déclenchement ;
la détermination d'un niveau d'ascendance de la commande d'ascendance ; et
lors de la détermination que le niveau d'ascendance de la commande d'ascendance est différent d'un niveau d'ascendance attendu de la commande d'ascendance pour la commande de déclenchement, le stockage des informations associées à la commande de déclenchement, la commande d'ascendance et le niveau d'ascendance de la commande d'ascendance en tant qu'un nouveau suspect modèle d'activité.

17. Support non transitoire lisible par ordinateur selon la revendication 16,
dans lequel la commande de déclenchement est une commande de déclenchement d'une pluralité de commandes de déclenchement présélectionnées, et
dans lequel la commande d'ascendance est une commande d'ascendance d'une pluralité de commandes d'ascendance présélectionnées associées à la commande de déclenchement.

18. Support lisible par ordinateur non transitoire selon la revendication 16, dans lequel la pluralité de commandes d'ascendance présélectionnées est associée à la commande de déclenchement pour le niveau d'ascendance et est différente d'une pluralité de commandes d'ascendance présélectionnées pour un second niveau d'ascendance qui est associée à la commande de déclenchement et qui est différent du niveau d'ascendance attendu.

19. Support lisible par ordinateur non transitoire selon la revendication 16, dans lequel les opérations comprennent en outre :
la détermination d'un statut administratif d'un utilisateur associé au processus en cours d'exécution sur le dispositif informatique surveillé,
dans lequel l'identification du ou des modèles d'activités suspectes est basée, en partie, sur le statut administratif de l'utilisateur associé au processus en cours d'exécution sur le dispositif informatique surveillé, le statut administratif ayant un facteur de pondération.

20. Support lisible par ordinateur non transitoire selon la revendication 16, dans lequel les opérations comprennent en outre :
la détermination d'une pluralité d'arbres de processus dans une pluralité de connexions dans un environnement spécifique auquel appartient le dispositif informatique surveillé ;
l'identification d'un arbre de processus de la pluralité d'arbres de processus ayant un nombre de lignes de commande inférieur à un nombre de seuil en tant qu'activité suspecte ; et
l'analyse statistique de l'arbre de processus pour la fréquence du nouveau modèle d'activité suspecte ; et
l'identification de l'arbre de processus comme une activité suspecte si la fréquence est inférieure à une fréquence seuil.
